## Europäisches Patentamt

## European Patent Office

## Office européen des brevets

(11) Veröffentlichungsnummer: **0 045 418**
**B1**

(12) **EUROPÄISCHE PATENTSCHRIFT**

(45) Veröffentlichungstag der Patentschrift:
**07.01.87**

(51) Int. Cl.⁴: **G 01 M 3/28, E 21 B 41/00**

(21) Anmeldenummer: **81105622.5**

(22) Anmeldetag: **17.07.81**

(54) **Vorrichtung zur Prüfung von Ölfeldrohren.**

(30) Priorität: **01.08.80 DE 3029180**

(43) Veröffentlichungstag der Anmeldung:
**10.02.82 Patentblatt 82/6**

(45) Bekanntmachung des Hinweises auf die Patenterteilung:
**07.01.87 Patentblatt 87/2**

(84) Benannte Vertragsstaaten:
**AT BE DE FR GB IT SE**

(56) Entgegenhaltungen:
**CH - A - 358 952**
**DE - C - 387 157**
**FR - A - 2 270 573**
**GB - A - 489 907**
**US - A - 2 246 885**
**US - A - 2 287 340**

(73) Patentinhaber: **Hoesch Aktiengesellschaft,
Eberhardstrasse 12, D-4600 Dortmund 1 (DE)**

(72) Erfinder: **Röll, Werner, Ing.grad., Holstenstrasse 61,
D-4700 Hamm 1 (DE)**

ACTORUM AG

## Beschreibung

Die Erfindung betrifft eine Vorrichtung zum Dichtheitsprüfen von Gewindeverbindungen an Ölfeldrohren mit hydraulischer Innendruckprüfung, bestehend aus einem Rahmen mit darauf angeordneter einen vorbestimmten axialen Spanndruck erzeugenden Spanneinrichtung für das Rohr, einem Hydraulikaggregat für die Versorgung mit einem unter einem bestimmten Prüfdruck stehenden Prüfmedium sowie aus einem Prüfkopf, der einen Ringraum um eine Gewindeverbindung zwischen dem Rohrende und einer Muffe abdichtet, sowie aus Dichtungen zur Abdichtung des Ringraumes im Prüfkopf aussen zwischen einem Aussenring und der Muffenoberfläche sowie innen zwischen Rohrinnenoberfläche und einem Innendorn.

Gemäss API Spec. 5 A, Abschnitt 5.1 müssen Tubings und Casings mit «power-tight» verschraubter Muffe – bis zum Durchmesser 13/8" (339,7 mm) – einer hydraulischen Innendruckprüfung unterzogen werden. Zu diesem Zweck werden die Tubings und Casings einschliesslich der Muffe üblicherweise einer Wasserdruckprüfmaschine zugeführt, in der das gesamte Rohr mit einem Wasser/Emulsions-Gemisch als Prüfmedium gefüllt und geprüft wird mit 5 sec Haltezeit.

Dieses Verfahren ist sehr aufwendig, da ein komplettes Wasserkreislauf-System installiert werden muss. Ausserdem lässt sich innerhalb der kurzen Haltezeit nicht feststellen, ob die Gewindeverbindung dicht ist, da Leckwasser nicht wahrnehmbar ist wegen des sowieso von der Maschine abtropfenden Wassers vom Entleeren des vorher geprüften Rohres. Ein mit dem Wasseraustritt verbundenes Absinken des Prüfdruckes wegen der geringen Leckwassermengen ist ebenfalls so gering, dass es nicht bemerkt wird. Ein weiterer Nachteil dieser Methode ist durch den hohen Aufwand für eine das Rohr beidseitig verschliessende Wasserdruckprüfmaschine gegeben, zumal beide Köpfe der Wasserdruckprüfmaschine die enormen Axialdruckkräfte des Prüfmediums aufnehmen müssen.

Es sind weiterhin Anlagen und Verfahren bekannt, die es ermöglichen, eine fertige Verbindung zweier Ölfeldrohre mit Überwurfmuffe im Einbauzustand von aussen (Gather Hauk Methode) oder von innen auf der Baustelle (Bohrturm) zu prüfen.

Diese Verfahren funktionieren jedoch nur, wie dargestellt, bei der fertigen Verbindung des Rohrstranges. Eine Übertragung der Methode für die Prüfung der Gewindeverbindung Rohr – Muffe im Herstellwerk ist deshalb ausgeschlossen, da für den Transport der Rohre zum Verbraucher eines der beiden Rohre aus der Muffe gelöst werden müsste, was meist zur Zerstörung der Gewinde führt.

Bei den Ausführungen gemäss US-A-2 246 885 und GB-A-489 907 dient ein verhältnismässig grosser Ringraum an Muffen-/Rohrwand als Prüfkammer. Darüber hinaus kann hier der die Prüfräume trennende Kragen (Anschlag für Rohrstirn) beim Einschieben das Muffengewinde beschädigen. Die Dichtung liegt zu weit hinter dem Muffenende, was bei Druckbeaufschlagung bis zur Streckgrenze zu einem unterschiedlichen Aufweiten des Rohrendes aufgrund unterschiedlicher Wanddicken im Gewinde- und Schaftbereich und damit zu Leckage führt. Bei zunehmendem Verschleiss der Dichtungen kann der Prüfkopf durch Druckkräfte auf die Muffenstirn vom Rohr abgezogen werden.

Bei der Ausführung gemäss US-A-2 246 885 wird weiterhin die Innendichtung undicht. Die Einschubtiefe des Prüfkopfes ist nicht fixiert. Wird der Kopf ganz aufgeschoben, wird der Raum ausserhalb der Muffe nicht befüllt und die Spannarme greifen nicht. Es kann zum Abstreifen der Muffe kommen, da Reaktionskräfte, entstehend durch Druck auf die Muffenstirnwand, nirgends aufgefangen werden ausser von den Spannarmen.

Aus der US-A-2 287 340 ist eine Vorrichtung zum Prüfen von Ölfeldsteigerohren und deren Muffenverbindungen bekannt, die als Prüfmedium neben anderen Flüssigkeiten auch Öl verwenden kann. Da eine Prüfung der Dichtheit von Muffenverbindungen wegen der häufig sehr kleinen Kapillarspalte im Gewinde eine reine Flüssigkeit als Prüfmedium benötigt, müsste auch in diesem Fall teures aufbereitetes Öl in grosser Menge verwendet werden.

Aufgabe der Erfindung ist es, eine Vorrichtung zu schaffen, die es ermöglicht, im Herstellwerk Ölfeldrohrgewindeverbindungen auf Dichtheit zu prüfen und bei geringer Haltezeit während der Rohrprüfung Leckagen zu erkennen unter Vermeidung eines hohen Anlagenaufwandes, wobei geringstmöglicher Aufwand für Prüfmedien getrieben wird und die Rohrgewinde nicht beschädigt werden.

Erfindungsgemäss wird die Aufgabe bei einer Vorrichtung der eingangs genannten Art gelöst durch die im Kennzeichenteil des Anspruchs 1 erfassten Merkmale.

Vorteilhafte weiterbildende Merkmale der Erfindung sind in den Unteransprüchen erfasst.

Die gesamte Prüfmedienmenge beim Durchmesser des Ölfeldrohres von 13 3/8" (339,7 mm) beträgt dabei etwa nur 2 l, während bei der herkömmlichen Wasserdruckprüfung bei einem 14 m langen Rohr allein etwa 1.270 l erforderlich sind, um das Rohr zu füllen.

Durch dieses geringe Volumen lässt sich die Füllzeit des Ringraumes auf ein Minimum herabsetzen.

Die Erfindung wird anhand eines in den Zeichnungen schematisch dargestellten Ausführungsbeispieles näher erläutert.

Es zeigt von einer erfindungsgemässen Vorrichtung

Fig. 1 eine Seitenansicht mit Teilschnitt,

Fig. 2 einen erfindungsgemässen Prüfkopf und eine Rohrspannvorrichtung im Halbschnitt gemäss II in Fig. 1,

Fig. 3 eine Teilansicht der erfindungsgemässen Vorrichtung im Schnitt gemäss III in Fig. 1, jedoch ohne Ölleitungen.

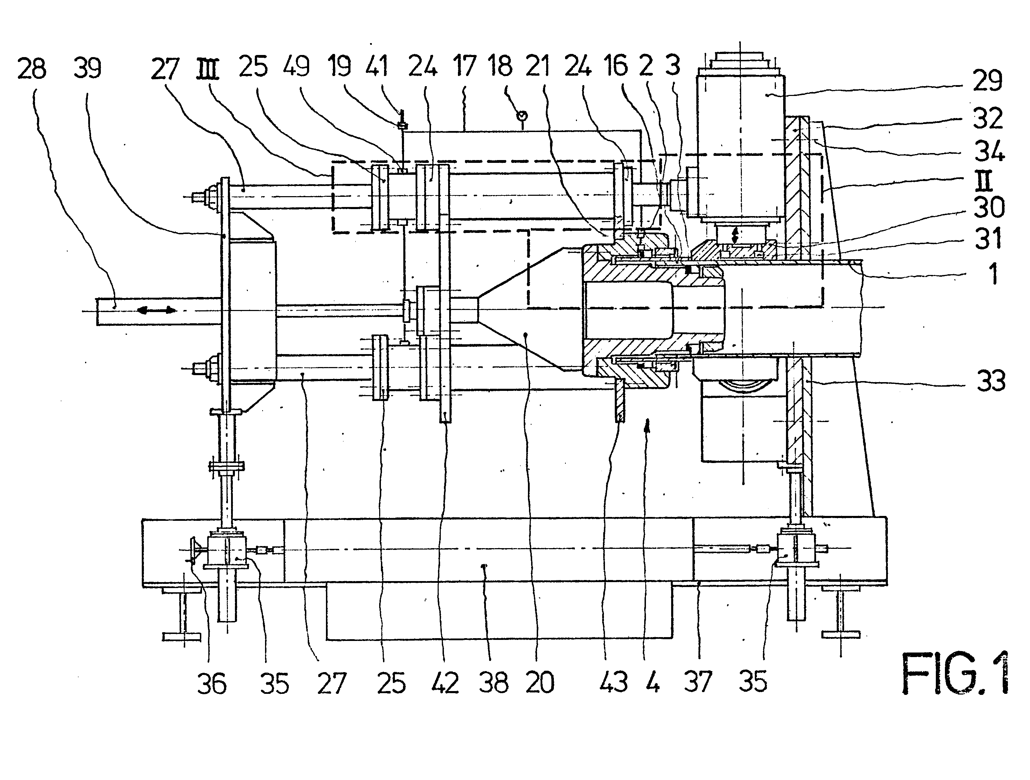

Ein Ölfeldrohr 1 ist am Rohrende 2 mit Gewinde versehen, auf das eine Muffe 3 aufgeschraubt worden ist (Fig. 1). Über einen nicht dargestellten Axialrollgang ist das Ölfeldrohr 1 samt Muffe 3 in die hydraulische Rohrbearbeitungsvorrichtung gefahren worden und zwar soweit bis die Muffe 3 in ganzer Länge den Bereich der Spannbacken 30 durchfahren hat. Mit Spannzylinder 29 werden die durch Verschraubung 31 gehaltenen Spannbacken 30 geschlossen, so dass sie das Ölfeldrohr 1 zentrisch halten aber nicht fest einspannen. Die gesamte hydraulische Rohrbearbeitungsvorrichtung steht auf einem nicht dargestellten Wagen, der nunmehr axial soweit zurückgefahren wird, dass die Spannbacken 30 hinter der Muffe 3 anliegen. Der Prüfkopf 4 wird jetzt mit Zylinder 28 über das mit der Muffe 3 versehene Rohrende 2 gefahren.

Der Prüfkopf 4 ist mit Schrauben 21 am Flansch 43 zentrisch im Führungsgehäuse 20 befestigt, das wiederum mit seinen Flanschen 42 und 43 über Führungsringe 24 auf drei um 120° am Umfang verteilt angeordneten Führungen 27 axial verschiebbar angeordnet ist. Der Prüfkopf 4 kann durch drei ebenfalls auf den Führungen 27 hinter den Führungsringen 24 angeordnete Spannringe 25 arretiert werden. Die Führungen 27 sind an der Führungsplatte 39 und den Spannzylindern 29 befestigt.

Die Spannzylinder 29 sind auf der Halterung 32 montiert, die gemeinsam mit der Führungsplatte 39 über Spindelhubelemente 35 mit Handrad 36 gegenüber dem Rahmen 37 höhenverstellbar sind, damit unterschiedliche Ölfeldrohrdurchmesser bearbeitet werden können. In der einmal eingestellten Höhe wird die Halterung 32 an der Spannplatte 33 durch die Befestigung 34 fixiert.

Je nach Durchmesser der Ölfeldrohre 1 müssen verschieden grosse Prüfköpfe 4 eingesetzt werden, die aber pro Durchmesser für den gesamten praktisch vorkommenden Rohrwanddickenbereich verwendbar sind. Für das Auswechseln der Prüfköpfe 4 müssen nur die Schrauben 21 und der Ölanschluss 16 gelöst werden.

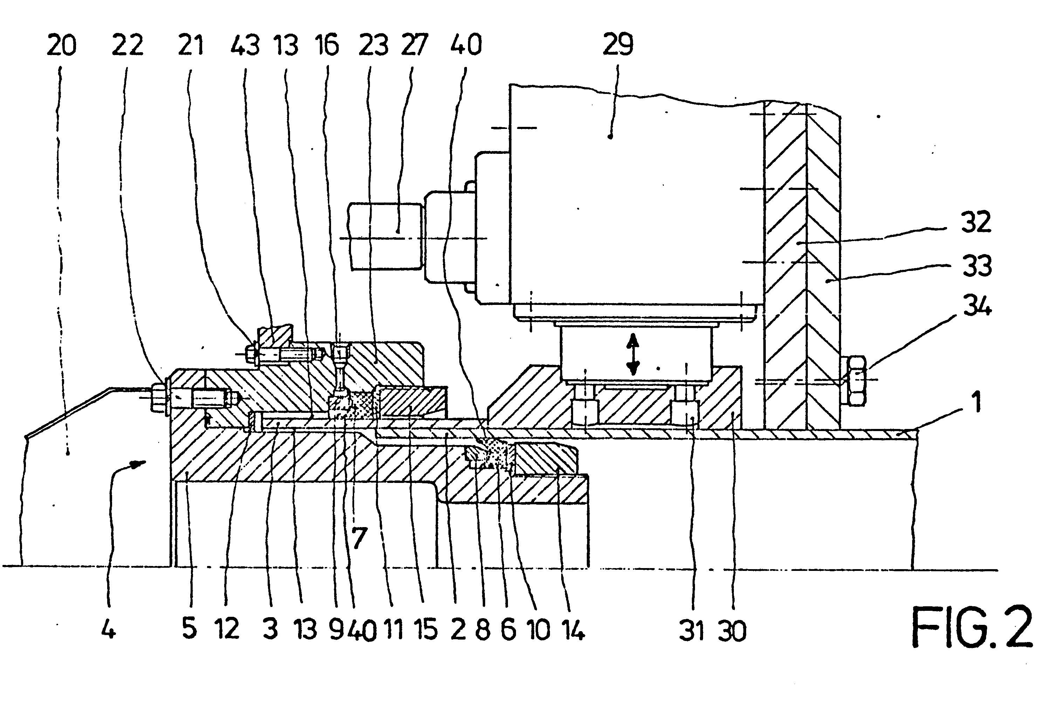

Der Prüfkopf 4 (Fig. 2) besteht aus dem Innendorn 5 und dem über Schrauben 22 darauf befestigten Aussenring 23. Innendorn 5 ist hohl zur Gewichtsersparnis und hat abgestufte Aussendurchmesser, damit der Ringraum 13 zwischen Muffe 3 bzw. Rohrende 2 mit Gewinde und Innendornoberfläche möglichst klein ist.

Der Ringraum 13 wird im Rohrinneren durch den auf den Innendorn 5 aufgeschobenen U-förmigen Dichtring 6 aus Vulcolan o.ä. Material begrenzt; Mutter 14 und Stützscheibe 10 sowie Stützring 8 fixieren den Sitz der Dichtung 6 in axialer Richtung.

Der Dichtungsschenkel 40 ist an der Aussenseite flach geformt, damit er eine grosse Anlagefläche gegenüber der Rohrwand hat, sich bei Druckaufbau im Ringraum 13 satt an die Rohrwand anlegt und nicht umgestülpt werden kann.

Ringraum 13 wird auf der Aussenseite der Muffe 3 ebenfalls durch eine im Aussenring 23 zwischen Stützring 9 sowie Stützscheibe 11 und Mutter 15 geklemmte Dichtung 7 begrenzt, deren Dichtungsschenkel 40 wie bereits beschrieben ausgeführt ist.

An der Trennlinie zwischen Aussenring 23 und Innendorn 5 des Prüfkopfes 4 direkt vor der Muffe 3 ist ein Anschlagring 12 angeordnet, der als Prallfläche für den Hub des Zylinders 28 dient und zusätzlich den hydraulischen Druck auf die oben genannte Trennlinie mindert. Der Anschlagring 12 ist mehrfach genutet, damit das Prüfmedium ungehindert im Ringraum 13 von der Aussenseite der Muffe 3 zur Innenseite fliessen kann.

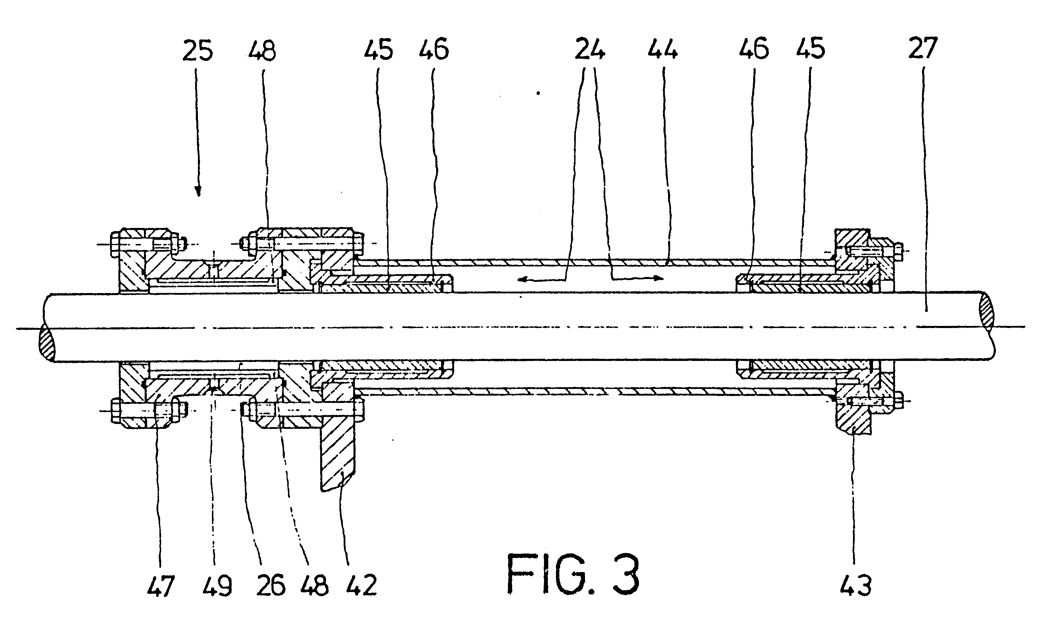

Fig. 3 zeigt die Anordnung der Führungsringe 24 (zwei Sätze mit je drei Führungsringen) auf den Führungen 27. Der Führungsring besteht aus dem Führungsringgehäuse 46 und der darin gelagerten Gleitbuchse 45. Je zwei Führungsringe 24 auf einer Führung 27 werden von einer Hülse 44 umschlossen als Verschmutzungsschutz. Sie sind zur Stabilisierung des Führungsgehäuses 20 an dessen Flanschen 42, 43 verschweisst.

Hinter dem Führungsgehäuse 20 sind die Spannringe 25 angeflanscht. Zwischen dem Spannringgehäuse 47 und den Ölanschlüssen 49 und den Manschetten 26 existiert ein Druckraum 48. Die Manschette 26 besteht aus einem elastischen Material mit Stahllamellen-Einlagen. Alle Druckräume 48 sind über Ölleitung 17 und Ölanschluss 16 (Fig. 1) mit dem Ringraum 13 des Prüfkopfes 4 verbunden. Der Öldruck ist am Manometer 18 als Absolutwert sowie als Differenzwert zwischen zwei Druckzuständen ablesbar.

Über ein Entlüftungsventil 19 und Entlüftungsschlauch 41 kann der Ölkreislauf entlüftet werden. Aus dem Entlüftungsschlauch 41 austretendes Öl wird in der Ölwanne 38 aufgefangen. Das gesamte Hydrauliksystem wird von einem nicht dargestellten Zentralhydraulikaggregat versorgt.

Sobald, wie oben beschrieben, der Prüfkopf 4 in Position über die Muffe 3 gefahren worden ist, wird eine Hochdruckpumpe des Zentralhydraulikaggregates bei geöffnetem Entlüftungsventil 19 eingeschaltet. Tritt das Öl blasenfrei aus dem Entlüftungsschlauch 41 aus, wird das Entlüftungsventil 19 geschlossen und der Druck des Prüfmediums bis auf den vorher eingestellten Prüfdruck (z.B. $p = 500$ bar) hochgefahren. Die Hochdruckpumpe wird abgeschaltet. Nach der vorgeschriebenen Haltezeit (z.B. 5 Sekunden) bei konstantem Druck wird das Entlüftungsventil 19 geöffnet, so dass das Öl über den Entlüftungsschlauch 41 in die Ölwanne 38 abfliessen kann.

Nach Ablassen des Prüfmediums wird der Prüfkopf mittels Zylinder 28 zurückgefahren, die Spannbacken 30 werden über Spannzylinder 29 geöffnet und das Ölfeldrohr 1 kann mit dem nicht dargestellten Axialrollgang axial aus der hydraulischen Rohrbearbeitungsvorrichtung gefördert werden.

**Patentansprüche**

1. Vorrichtung zum Dichtheitsprüfen von Gewindeverbindungen an Ölfeldrohren mit hydraulischer Innendruckprüfung, bestehend aus einem Rahmen mit darauf angeordneter einen vorbestimmten axialen Spanndruck erzeugenden Spanneinrichtung (29, 30) für das Rohr (1), einem Hydraulikaggregat für die Versorgung mit einem unter einem bestimmten Prüfdruck stehenden Prüfmedium sowie aus einem Prüfkopf (4), der einen Ringraum (13) um eine Gewindeverbindung zwischen dem Rohrende (2) und einer Muffe (3) abdichtet, sowie aus Dichtungen (6, 7) zur Abdichtung des Ringraumes (13) im Prüfkopf (4) aussen zwischen einem Aussenring (23) und der Muffenoberfläche sowie innen zwischen Rohrinnenoberfläche und einem Innendorn (5), dadurch gekennzeichnet, dass die Differenz zwischen Aussen- und Innenradius des Ringraumes (13) maximal das 1,5fache der maximalen Wanddicke des Rohres (1) beträgt, dass das Hydraulikaggregat auch zur Lieferung des Spanndrucks eingerichtet ist derart, dass bei Axialverspannung des Prüfkopfes (4) Prüfdruck und Spanndruck gleich sind und dass Öl als Prüfmedium vorgesehen ist.

2. Vorrichtung nach Anspruch 1, gekennzeichnet durch axiale Einspannung der Muffe (3) des Rohres (1) zwischen Spannbacken (30) einer Spannvorrichtung und einem Anschlagring (12) des Prüfkopfes (4).

3. Vorrichtung nach den Ansprüchen 1 und 2, dadurch gekennzeichnet, dass der gesamte Prüfkopf (4), der Aussenring (23), der Innendorn (5) und die Dichtungen (6, 7) jeweils einzeln auswechselbar sind.

4. Vorrichtung nach den Ansprüchen 1 bis 3, gekennzeichnet durch eine Höhenverstellung für den Prüfkopf (4).

5. Vorrichtung nach den Ansprüchen 1 bis 4, gekennzeichnet durch synchron betätigbare Spindelhubelemente (35) für die Höhenverstellung des Prüfkopfes (4).

6. Vorrichtung nach den Ansprüchen 1 bis 5, dadurch gekennzeichnet, dass der Prüfkopf (4) über ein Führungsgehäuse (20) und dessen Flanschen (42, 43) durch Führungsringe (24) mit drei gleichmässig am Umfang verteilt angeordneten axialen Führungen (27) verbunden ist.

7. Vorrichtung nach den Ansprüchen 1 bis 6, gekennzeichnet durch drei die Führungen (27) umschliessende Spannringe (25) für die Axialverspannung des Prüfkopfes (4).

8. Vorrichtung nach einem oder mehreren der vorhergehenden Ansprüche, gekennzeichnet durch ein in der hydraulischen Verbindung angeordnetes Manometer (18) mit Anzeigen für den Prüfdruck und den Druckabfall.

**Claims**

1. Apparatus for testing the tightness of threaded connections on oil pipes using hydraulic interior pressure testing, consisting of a frame with a clamping device (29, 30) for the pipe (1) mounted thereon for producing a predetermined axial clamping pressure, a hydraulic assembly for supplying a test medium under a predetermined test pressure as well as a test head (4), which seals an annular space (13) about a threaded connection between the pipe end (2) and a sleeve (3), as well as seals (6, 7) for sealing the annular space (13) in the test head (4) externally between an outer ring (23) and the sleeve surface as well as internally between the inner surface of the pipe and an interior mandrel (5), characterised in that the difference between the external and internal radii of the annular space (13) amounts at a maximum to 1.5 times the maximum wall thickness of the pipe (1), that the hydraulic assembly for supplying the clamping pressure is arranged so that, on axial clamping of the test head (4), the testing pressure and the clamping pressure are the same and that oil is provided as the test medium.

2. Apparatus according to claim 1, characterised by axial clamping of the sleeve (3) to the tube (1) between the jaws (30) of a clamping device and an abutment ring (12) on the test head (4).

3. Apparatus according to claims 1 and 2, characterised in that the whole test head (4), the outer ring (23), the inner mandrel (5) and the seals (6, 7) are separately replaceable.

4. Apparatus according to claims 1 to 3, characterised by a height adjustment for the test head (4).

5. Apparatus according to claims 1 to 4, characterised by synchronously-actuatable spindle elements (35) for adjusting the height of the test head (4).

6. Apparatus according to claims 1 to 5, characterised in that the test head (4) is connected by means of a guide housing (20) and its flanges (42, 43) by guide rings (24) with three axial guides (27) uniformly arranged about its periphery.

7. Apparatus according to claims 1 to 6, characterised by three clamping rings (25) surrounding the guides (27) for axially clamping the test head (4).

8. Apparatus according to one or more of the preceding claims, characterised by a manometer (18) arranged in the hydraulic connection, with indicators for the test pressure and the drop in pressure.

**Revendications**

1. Dispositif pour l'essai d'étanchéité des assemblages filetés de tubages pétroliers avec essai sous pression hydraulique interne, constitué d'un châssis sur lequel est disposé un dispositif de serrage (29, 30) pour le tube (1), créant une pression de serrage axiale prédéterminée, d'un groupe hydraulique pour l'alimentation en fluide d'essai sous une pression d'essai déterminée, ainsi que d'une tête d'essai (4) qui assure l'étanchéité d'un espace annulaire (13), autour d'un assemblage fileté entre l'extrémité de tube (2) et un manchon (3), ainsi que de joints (6, 7) pour fermer, de manière étanche, l'espace annulaire (13) dans la tête d'essai (4), à l'extérieur, entre une bague extérieure (23) et la surface externe du manchon, ainsi qu'à l'intérieur, entre la surface interne du tube et un mandrin intérieur (5), caractérisé en ce que la différence entre le rayon externe et le rayon interne de l'espace annulaire (13), est égal, au maximum, à 1,5 fois l'épaisseur de paroi maximale du tube (1), en ce que le groupe hydraulique est également conçu pour créer la pression de serrage de sorte que, lors du serrage axial de la tête d'essai (4) la pression d'essai et la pression de serrage sont égales, et en ce que l'on utilise de l'huile comme fluide d'essai.

2. Dispositif selon la revendication 1, caractérisé par un serrage axial du manchon (3) du tube (1) entre les mâchoires de serrage (30) d'un dispositif de serrage et une bague de butée (12) de la tête d'essai (4).

3. Dispositif selon les revendications 1 et 2, caractérisé en ce que la tête d'essai (4), la bague extérieure (23), le mandrin intérieur (5) et les joints (6, 7) sont tous individuellement interchangeables.

4. Dispositif selon les revendications 1 à 3, caractérisé en ce que la tête d'essai (4) est réglabel en hauteur.

5. Dispositif selon les revendications 1 à 4, caractérisé par des éléments de soulèvement à vis (35) actionnés en synchronisme, pour assurer le réglage en hauteur de la tête d'essai (4).

6. Dispositif selon les revendications 1 à 5, caractérisé en ce que la tête d'essai (4) est reliée, par l'intermédiaire d'un bâti de guidage (20) et ses brides (42, 43), au moyen de bagues du guidage (24), à trois guides axiaux (27) répartis de manière équidistante à la périphérie.

7. Dispositif selon les revendications 1 à 6, caractérisé par trois bagues de serrage (25) entourant les guides (27), pour assurer le serrage axial de la tête d'essai (4).

8. Dispositif selon une ou plusieurs des revendications précédentes, caractérisé par un manomètre (18), disposé dans la liaison hydraulique, avec indication de la pression d'essai et de la chute de pression.

FIG.1

20 22 21 43 13 16 23 27 40 29 32 33 34

0 045 418

1

7

4 5 12 3 13 9 40 11 15 2 8 6 10 14 31 30

FIG.2

FIG. 3